# EUROPEAN PATENT APPLICATION

(11) **EP 4 761 341 A1**
(43) Date of publication of application: **17.06.2026**
(21) Application number: 23948480.1
(22) Date of filing: 09.08.2023
(51) Int. Cl.: H04W 24/10, H04W 16/28, H04W 28/16

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/029105
(87) International publication number: WO 2025/032760

(57) **Abstract**

A terminal according to one aspect of the present disclosure includes a control section that judges, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal, and a receiving section that applies the TCI state to receive the A-CSI-RS, wherein said another downlink signal is associated with a same control resource set (CORESET) pool index as a CORESET pool index of a physical downlink control channel (PDCCH) for triggering the A-CSI-RS. According to one aspect of the present disclosure, it is possible to appropriately apply a TCI state(s).

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

It is studied to apply a configured/activated/indicated TCI state to a plurality of types of signals (channels/RSs). However, a method of indicating such a TCI state is not clear for some cases. Unless a method of indicating a TCI state is clear, degradation in communication quality, throughput reduction, and the like may occur.

Thus, an object of the present disclosure is to provide a terminal, a radio communication method, and a base station that enable appropriate application of a TCI state.

### Solution to Problem

A terminal according to one aspect of the present disclosure includes a control section that judges, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal, and a receiving section that applies the TCI state to receive the A-CSI-RS, wherein said another downlink signal is associated with a same control resource set (CORESET) pool index as a CORESET pool index of a physical downlink control channel (PDCCH) for triggering the A-CSI-RS.

### Advantageous Effects of Invention

According to one aspect of the present disclosure, it is possible to appropriately apply a TCI state(s).

### Brief Description of Drawings

[FIG. 1] FIG. 1A and FIG. 1B show examples of a unified/common TCI framework.
[FIG. 2] FIG. 2A and FIG. 2B show examples of DCI-based TCI state indication.
[FIG. 3] FIG. 3A to FIG. 3D are diagrams to show examples of multi-TRP.
[FIG. 4] FIG. 4A to FIG. 4C are diagrams to show an example of application of an indicated TCI state.
[FIG. 5] FIG. 5 is a diagram to show an example of application of an indicated TCI state for an A-CSI-RS.
[FIG. 6] FIG. 6 is a diagram to show an example of application of a TCI state according to a first embodiment.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure/Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification/RRC IE/TCI State}

A TCI-State (TCI state) associates one or two DL reference signals (RSs) with a corresponding QCL type. If an additional physical cell identifier (PCI) is configured for the RS, the same value is configured for both of the DL RSs.

### (Default TCI State/Default Spatial Relation/Default PL-RS)

In Rel. 16, a PDSCH may be scheduled by DCI including a TCI field. A TCI state for the PDSCH is indicated by the TCI field. A TCI field in DCI format 1_1 is of 3 bits, and a TCI field in DCI format 1_2 is of 3 bits at maximum.

In the RRC connected mode, if a first TCI-present-in-DCI information element (higher layer parameter tci-PresentInDCI) is set at "enabled" for a CORESET for scheduling a PDSCH, a UE assumes that a TCI field is present in DCI format 1_1 for a PDCCH to be transmitted in the CORESET.

If a second TCI-present-in-DCI information element (higher layer parameter tci-PresentInDCI-1_2) for a CORESET for scheduling a PDSCH is configured for a UE, the UE assumes that a TCI field having a DCI field size indicated by the second TCI-present-in-DCI information element is present in DCI format 1_2 for the PDSCH to be transmitted in the CORESET.

In Rel. 16, a PDSCH may be scheduled by DCI including no TCI field. A DCI format of the DCI may be DCI format 1_0 or DCI format 1_1/1_2 of a case where no TCI-present-in-DCI information element (higher layer parameter tci-PresentInDCI or tci-PresentInDCI-1-2) is configured (enabled). If a time offset between reception of DL DCI (DCI for scheduling a PDSCH (scheduling DCI)) and a corresponding PDSCH (PDSCH scheduled by the DCI) is equal to or larger than a threshold value (timeDurationForQCL) in a case where a PDSCH is scheduled by DCI including no TCI field, a UE assumes that a TCI state or QCL assumption for the PDSCH is the same as the TCI state or QCL assumption (default TCI state) of a CORESET (for example, scheduling DCI).

In the RRC connected mode, in both cases where TCI-present-in-DCI information elements (higher layer parameters tci-PresentInDCI and tci-PresentInDCI-1-2) is set at "enabled" and where no TCI-present-in-DCI information element is configured, when a time offset between reception of DL DCI (DCI for scheduling a PDSCH) and the corresponding PDSCH (PDSCH scheduled by the DCI) is smaller than a threshold value (timeDurationForQCL) (application condition, first condition), a TCI state (default TCI state) of the PDSCH may be the TCI state having the lowest CORESET ID in the latest slot in an active DL BWP of a corresponding CC (of a specific UL signal) in a case of non-cross-carrier scheduling. Otherwise, the TCI state (default TCI state) of the PDSCH may be the TCI state having the lowest TCI state ID of a PDSCH in an active DL BWP of a scheduled CC.

In Rel. 15, individual MAC CEs including a MAC CE for activation/deactivation of a PUCCH spatial relation and a MAC CE for activation/deactivation of an SRS spatial relation are needed. A PUSCH spatial relation conforms to the SRS spatial relation.

In Rel. 16, at least one of a MAC CE for activation/deactivation of a PUCCH spatial relation and a MAC CE for activation/deactivation of an SRS spatial relation need not be used.

If neither a spatial relation nor a PL-RS for a PUCCH is configured in FR2 (application condition, second condition), default assumptions of a spatial relation and a PL-RS (default spatial relation and default PL-RS) are applied to the PUCCH. If neither a spatial relation nor a PL-RS for an SRS (SRS resource for the SRS or SRS resource corresponding to an SRI in DCI format 0_1 for scheduling a PUSCH) is configured in FR2 (application condition, second condition), default assumptions of a spatial relation and a PL-RS (default spatial relation and default PL-RS) are applied to the PUSCH scheduled by DCI format 0_1 and the SRS.

If a CORESET is configured in an active DL BWP of the CC (application condition), the default spatial relation and the default PL-RS may correspond to the TCI state or the QCL assumption of the CORESET having the lowest CORESET ID in the active DL BWP. If no CORESET is configured in an active DL BWP of the CC, the default spatial relation and the default PL-RS may correspond to the active TCI state having the lowest ID of a PDSCH in the active DL BWP.

In Rel. 15, a spatial relation of a PUSCH scheduled by DCI format 0_0 conforms to a spatial relation of a PUCCH resource having the lowest PUCCH resource ID among active spatial relations of PUCCHs of the same CC. Even when no PUCCH is transmitted in an SCell, a network need update all PUCCH spatial relations in the SCell.

In Rel. 16, no PUCCH configuration for a PUSCH scheduled by DCI format 0_0 is needed. When no active PUCCH spatial relation or no PUCCH resource is present in an active UL BWP of a corresponding CC for a PUSCH scheduled by DCI format 0_0 (application condition, second condition), a default spatial relation and a default PL-RS are applied to the PUSCH.

An application condition for a default spatial relation/default PL-RS for SRS may include that an enable-default-beam-pathloss-for-SRS information element (higher layer parameter enableDefaultBeamPlForSRS) is set at enabled. An application condition for a default spatial relation/default PL-RS for PUCCH may include that an enable-default-beam-pathloss-for-PUCCH information element (higher layer parameter enableDefaultBeamPlForPUCCH) is set at enabled. An application condition for a default spatial relation/default PL-RS for PUSCH scheduled by DCI format 0_0 may include that an enable-default-beam-pathloss-for-PUSCH information element, the PUSCH being scheduled by DCI format 0_0, (higher layer parameter enableDefaultBeamPlForPUSCH0_0) is set at enabled.

In Rel. 16, when an RRC parameter (parameter that enables a default beam PL for PUCCH (enableDefaultBeamPL-ForPUCCH), a parameter that enables a default beam PL for PUSCH (enableDefaultBeamPL-ForPUSCH0_0), or a parameter that enables a default beam PL for SRS (enableDefaultBeamPL-ForSRS)) is configured and no spatial relation or PL-RS is configured, for a UE, the UE applies a default spatial relation/PL-RS.

The threshold value may be referred to as a time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold value, a scheduling offset threshold value, and the like. The threshold value may be reported as a UE capability (for each subcarrier spacing) by a UE.

In a case where an offset (scheduling offset) between reception of DL DCI and a PDSCH corresponding to the DL DCI is smaller than a threshold value timeDurationForQCL, where at least one TCI state configured for the serving cell of a scheduled PDSCH includes "QCL type D," where a UE is configured with an enable-two-default-TCI information element (enableTwoDefaultTCIStates-r16), and where at least one TCI codepoint (codepoint of a TCI field in the DL DCI) indicates two TCI states, the UE assumes that a DMRS port of the PDSCH of the serving cell or a PDSCH transmission occasion is QCLed (quasi co-located) with an RS related to a QCL parameter associated with two TCI states corresponding to the lowest codepoint of TCI codepoints including two different TCI states (2-default-QCL-assumption determination rule). The enable-2-default-TCI information element indicates that Rel-16 operation for two default TCI states for PDSCH when at least one TCI codepoint is mapped to two TCI states is enabled.

As a default TCI state of a PDSCH in Rel. 15/16, specifications of a default TCI state for single TRP, a default TCI state for multi-DCI based multi-TRP, and a default TCI state for single-DCI based multi-TRP are drafted.

As a default TCI state of an aperiodic CSI-RS (A-CSI-RS) in Rel. 15/16, specifications of a default TCI state for single TRP, a default TCI state for multi-DCI based multi-TRP, and a default TCI state for single-DCI based multi-TRP are drafted.

Specifications of a default spatial relation and a default PL-RS for each PUSCH/PUCCH/SRS in Rel. 15/16 are drafted.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

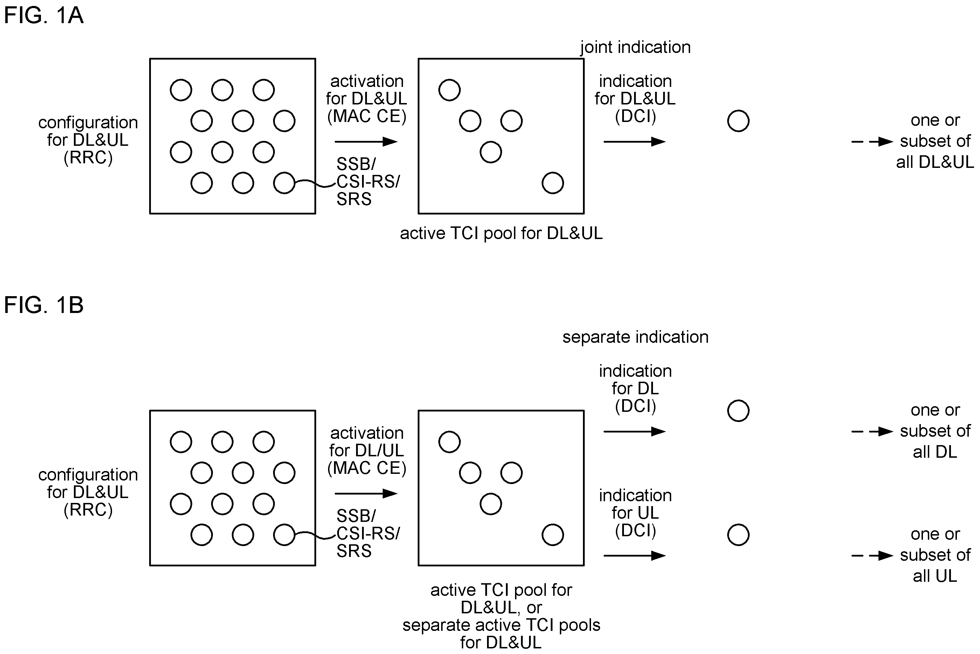

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

### {Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1 2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

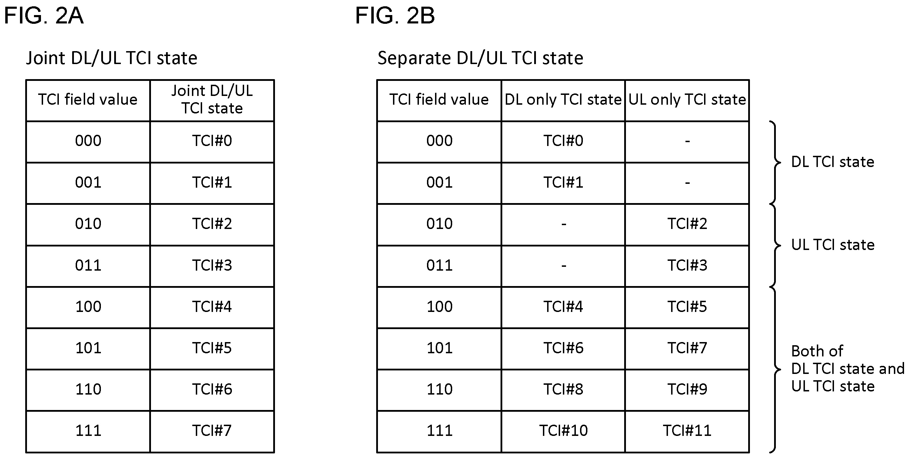

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI) or a virtual cell ID.

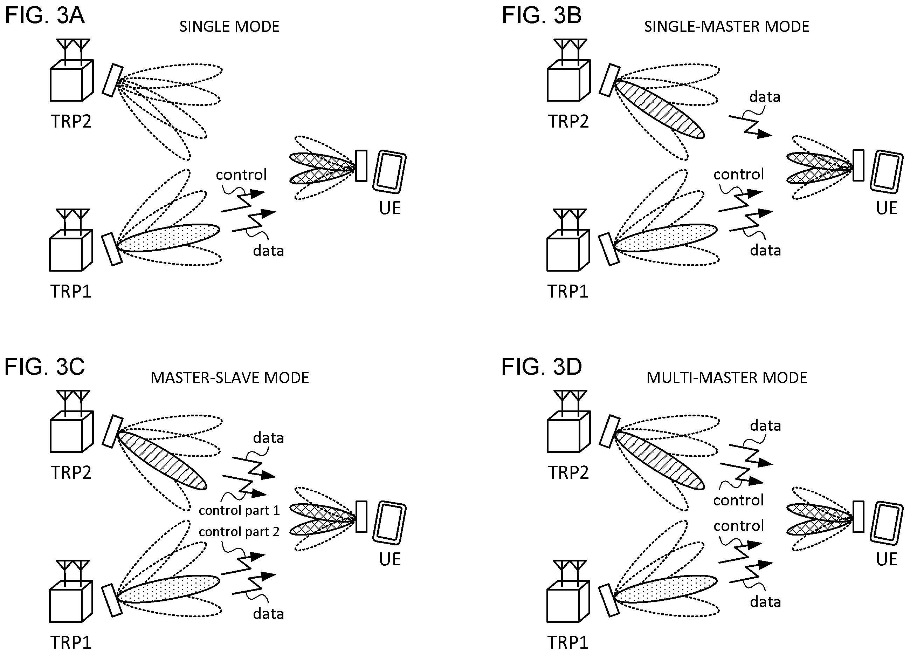

FIG. 3A to FIG. 3D are diagrams to show examples of multi-TRP scenarios. In these examples, it is assumed that each TRP can transmit four different beams, but this is not restrictive.

FIG. 3A shows an example of a case where only one TRP (TRP1 in this example) of the multi-TRP performs transmission to a UE (which may be referred to as a single mode, a single TRP, and the like). In this case, TRP1 transmits both a control signal (PDCCH) and a data signal (PDSCH) to the UE.

In the present disclosure, a single-TRP mode may mean a mode where no multi-TRP (mode) is configured.

FIG. 3B shows an example of a case where only one TRP (TRP1 in this example) of the multi-TRP transmits a control signal to a UE and where the multi-TRP transmits data signals (which may be referred to as a single-master mode). The UE receives respective PDSCHs transmitted from the multi-TRP, based on one piece of downlink control information (DCI).

FIG. 3C shows an example of a case where the respective TRPs of the multi-TRP transmit parts of a control signal to a UE and where the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives respective PDSCHs transmitted from the multi-TRP, based on these parts of the DCI.

FIG. 3D shows an example of a case where the respective TRPs of the multi-TRP transmit different control signals to a UE and where the multi-TRP transmits data signals (which may be referred to as a multi-master mode). TRP1 may transmit a first control signal (DCI), and TRP2 may transmit a second control signal (DCI). The UE receives respective PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 3B, the DCI may be referred to as single DCI (S-DCI, single PDCCH). When a plurality of PDSCHs from multi-TRP are scheduled by using a plurality of pieces of DCI as in FIG. 3D, the plurality of pieces of DCI may be referred to as multi-DCI (M-DCI, multi-PDCCH (multiple PDCCHs)).

Each TRP of the multi-TRP may transmit a different transport block (TB)/codeword (Code Word (CW))/different layer. Alternatively, each TRP of the multi-TRP may transmit the same TB/CW/layer.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such multi-TRP scenarios, more flexible transmission control using a channel with high quality is possible.

NCJT using multi-TRP/panel has a possibility of using a high rank. To support ideal and non-ideal backhaul between a plurality of TRPs, both single DCI (single PDCCH, for example, FIG. 3B) and multi-DCI (multi-PDCCH, for example, FIG. 3D) may be supported. The maximum number of TRPs may be two for both single DCI and multi-DCI.

TCI enhancement is studied for single-PDCCH design (mainly for ideal backhaul). Each TCI codepoint in DCI may correspond to one or two TCI states. A TCI field size may be the same as that of Rel. 15.

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

### (Analysis)

In Rel. 18 or later versions, it is studied to introduce a case where multi-TRP is configured and where a unified TCI state is applied.

In multi-TRP operation of an existing specification (Rel. 16 or earlier versions), by DCI for scheduling a DL signal (for example, a PDSCH) (which may be referred to as scheduling DCI), the number of TCI states to be applied to the signal thus scheduled is controlled.

Specifically, a UE determines to use a single TRP when the number of TCI state indicated by the DCI is one, and determines to use multi-TRP when the number of TCI states indicated by the DCI is two. In this way, the UE performs switch between a single TRP and multi-TRP, based on the number of TCI states indicated by DCI.

Meanwhile, in a case where multi-TRP of Rel. 18 or later versions is configured and also where a unified TCI state is applied, it is studied to initiate application of a TCI state indicated by beam indication DCI after the elapse of BAT from transmission of an HARQ-ACK related to the DCI.

Hence, it is considered that, when switch between a single TRP and multi-TRP is performed based on the number of indicated TCI states, switch by scheduling DCI as those in an existing specification cannot be performed.

Specifically, X TCI states (indicated TCI states/unified TCI states) (X is an integer equal to or larger than 2 (for example, 2 or 4)) are indicated at maximum for a UE by RRC/MAC CE/DCI, one or a plurality of (for example, two) TCIs are subsequently selected/determined from the X TCI states by scheduling DCI.

In Rel. 18 or later versions for which such a case is conceivable, a UE cannot recognize how many TCI states are indicated until decoding of DCI is completed.

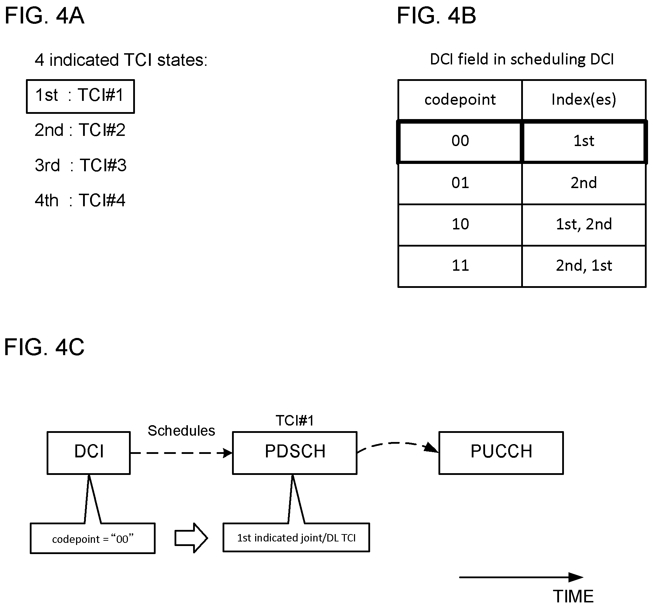

FIG. 4A to FIG. 4C are diagrams to show an example of application of an indicated TCI state. As in the example shown in FIG. 4A, four indicated TCI states (TCI #1 as a first TCI state, TCI #2 as a second TCI state, TCI #3 as a third TCI state, and TCI #4 as a fourth TCI state) are indicated to a UE by RRC/MAC CE/DCI.

As in the example shown in FIG. 4B, switch between a single TRP and multi-TRP is performed by a specific field (existing field (which may be a TCI field, for example)/new field) included in scheduling DCI (DCI format 1_1/1_2). In the example shown in FIG. 4B, "00" is shown as a codepoint of the field, to indicate application of the first TCI state (in other words, single-TRP operation is indicated).

FIG. 4C shows an example of reception of scheduling DCI and a scheduled PDSCH and transmission of a PUCCH corresponding to the PDSCH by a UE. The DCI indicates application of the first TCI state as shown in FIG. 4B. In this case, the UE determines to apply the first TCI state (indicated TCI state, joint/DL TCI state) to a PDSCH.

Application of a TCI state as that shown in FIG. 4A to FIG. 4C is possible when a PDSCH is received after completion of decoding of scheduling DCI. Otherwise (for example, when a scheduling offset is smaller than a specific threshold value), a UE cannot determine an indicated TCI state to apply to a channel/signal (in this case, a PDSCH).

For Rel. 18 or later versions, it is studied that a UE buffers a DL signal by using one or a plurality of indicated TCI states. In this case, studies have not been sufficiently made on how many indicated TCI states/which indicated TCI state(s) the UE performs buffering with.

For Rel. 18 or later versions, it is assumed that in multi-TRP, a unified TCI state is applied to a CSI-RS (for example, an aperiodic CSI-RS/A-CSI-RS). For example, a CSI request field of DCI may support triggering of one or a plurality of A-CSI-RS resources corresponding to each CSI-aperiodic trigger state (for example, CSI-AperiodicTriggerState).

In this case, which of a plurality of (for example, up to two) indicated TCI states (joint/DL TCI states) is to be applied to the A-CSI-RS may be configured for each CSI-aperiodic trigger state by RRC. This may mean that an indicated TCI state (joint/DL TCI state) for the A-CSI-RS triggered by the triggering DCI can be switched.

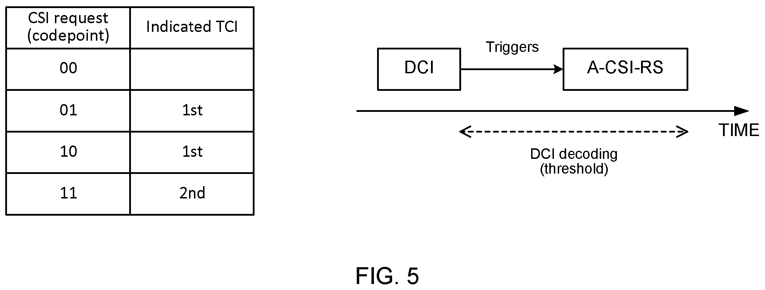

On the other hand, the UE receives, for some cases, the A-CSI-RS before completing DCI decoding, and thus this poses a problem of how to control reception of the A-CSI-RS (for example, QCL/TCI state for the reception) when a triggering offset (for example, a period of time from the DCI to the A-CSI-RS) is less than a specific threshold (see FIG. 5).

FIG. 5 shows an example of the case where the triggering offset for the A-CSI-RS is less than the specific threshold. FIG. 5 shows a case where a first joint/DL TCI state or a second joint/DL TCI state is configured for codepoints (here, codepoints 01, 10, 11) of a CSI request field. In FIG. 5, the A-CSI-RS can be indicated with the first joint/DL TCI state or the second joint/DL TCI state, depending on the CSI request field of the DCI.

When a triggering offset for the A-CSI-RS (for example, a period of time from the DCI to the A-CSI-RS) is less than a specific threshold, the UE may fail to judge which joint/DL TCI state is indicated for the A-CSI-RS by the DCI.

Unless studies of such a case where the UE fails to judge a TCI state to be applied are sufficient, a TCI state cannot be applied appropriately, and degradation in communication quality, throughput reduction, and the like may occur.

Thus, the inventors of the present invention focused on these problems, studied operation related to a unified TCI state, and came up with the idea of one aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, multi-TRP (a plurality of TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, beam indication DCI, a beam indication MAC CE, and beam indication DCI/MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying a TCI state/QCL assumption to transmission/reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n-th TCI state (TCI state indicated n-th) may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of a plurality of TCI states in transmission/reception using a plurality of TRPs (in other words, a case where at least one of N and M is 2). However, the number of TRPs may be three or more (more than one), and each embodiment may be applied in accordance with the number of TRPs. In other words, at least one of N and M may be a number larger than 2.

In the present disclosure, schedule, trigger, and activate may be interchangeably interpreted.

### (Radio Communication Method)

Each embodiment of the present disclosure below may be applied to reception of any DL channel/signal (for example, an A-CSI-RS/PDSCH).

Each embodiment of the present disclosure below may be applied to a unified TCI state for single-DCI based/multi-DCI based multi-TRP, for example.

A DCI format (for example, DCI format 1_1/1-2 (which may be referred to as DL DCI)) for scheduling/activation/triggering of a DL channel/signal may include a specific field (new DCI field).

The specific field may be a field indicating application of one or a plurality of (for example, both/two) indicated TCI states (joint/DL TCI states) to a scheduled/activated/triggered DL channel/signal. In other words, the specific field may be a field indicating the number/order of indicated TCI states to be applied.

The specific field may be represented by a specific number of bits (for example, 2 bits).

In the present disclosure, the specific field may be referred to as a TCI selection field, but the name thereof is not limited to this.

An offset between reception of DL DCI and reception of a corresponding DL channel/signal (which may be interpreted hereinafter as a scheduling offset, a triggering offset, or the like) may be smaller than a specific threshold. In this case, a UE may buffer a received signal using an indicated TCI state (joint/DL TCI state).

Each embodiment of the present disclosure below primarily describes an example in which a DL channel/signal is an A-CSI-RS, but this is merely an example, and each embodiment of the present disclosure can also be applied to any DL signal/channel.

The UE may be configured with operation related to a unified TCI state using single/multi-DCI based multi-TRP, and a triggering offset for an A-CSI-RS may be less than a specified threshold.

The UE may judge a TCI state to be applied to the A-CSI-RS, based on at least one of configuration of a specific RRC parameter, whether another DL signal is present in the same symbol as that for the A-CSI-RS, a frequency range, the presence or absence of support of a specific UE capability, and a QCL assumption/TCI state for the DL signal.

A base station may indicate a TCI state to be applied to the A-CSI-RS, by using at least one of configuration of a specific RRC parameter, whether another DL signal is present in the same symbol as that for the A-CSI-RS, a frequency range, the presence or absence of support of a specific UE capability, and a QCL assumption/TCI state for the DL signal.

### <First Embodiment>

At least one of operation related to a default beam of a DL signal (for example, A-CSI-RS) for single-DCI based multi-TRP (sDCI based M-TRP) and operation related to a default beam of a DL signal (for example, A-CSI-RS) for multi-DCI based multi-TRP (mDCI based M-TRP) may be defined.

Operation related to a default beam of a DL signal (for example, A-CSI-RS) for single-DCI based multi-TRP and operation related to a default beam of a DL signal (for example, A-CSI-RS) for multi-DCI based multi-TRP may be separately defined.

### <<Embodiment 1-1>>

A unified TCI state framework may be enhanced for single-DCI based multi-TRP.

An RRC configuration/RRC parameter for notifying a UE of application of a first or second indicated (joint/DL) TCI state to a CSI-RS resource may be provided/configured.

The provision/configuration of the RRC configuration/RRC parameter may be performed when an A-CSI-RS resource set for CSI/beam management (BM) is configured to follow a unified TCI state.

An offset (triggering offset) between a last symbol of a PDCCH for delivering triggering DCI and a start symbol of an A-CSI-RS resource of the A-CSI-RS resource set may be less than a specific threshold.

### {Option 1-1-1}

Any other DL signal may be present in the same symbol as that for the CSI-RS.

In this case, the UE may apply a QCL assumption/TCI state for such another DL signal to reception of an A-CSI-RS.

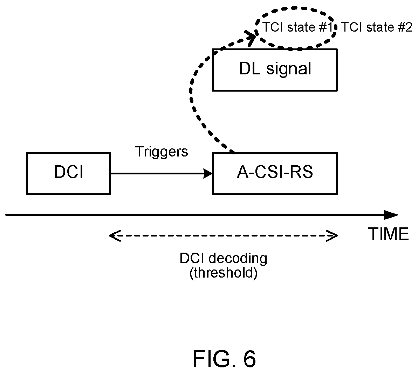

When such another DL signal includes a plurality of (for example, two) TCI states (when such another DL signal is associated with a plurality of (for example, two) TCI states), the UE may apply a first TCI state of the plurality of TCI states to reception of the A-CSI-RS (see FIG. 6, an example of which shows an example in which the first TCI state is TCI state #1).

According to option 1-1-1, irrespective of whether a QCL assumption for a DL signal in the same symbol as that for the A-CSI-RS is equivalent to an indicated TCI state and irrespective of support of a capability related to a plurality of default beams, it is possible to define UE operation and to achieve avoidance of complexity and cost reduction of the UE.

### {Option 1-1-2}

Any other DL signal may not be present in the same symbol as that for the CSI-RS. Any other DL signal not including a TCI state may be present in the same symbol as that for the CSI-RS.

Option 1-1-2 may be applied to a case where a condition for application of option 1-1-1 above is not satisfied (for example, a case of "Else").

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

When the UE does not support the capability related to a plurality of (two) default beams in the second frequency range (for example, FR2), the UE may apply, irrespective of the provided/configured RRC configuration/RRC parameter above, the first (or second) indicated (joint/DL) TCI state to (reception of) the A-CSI-RS.

According to Embodiment 1-1, even when the unified TCI state framework is used for single-DCI based multi-TRP, it is possible to appropriately determine a TCI state/QCL assumption to be applied to the A-CSI-RS.

### <<Embodiment 1-2>>

A unified TCI state framework may be enhanced for multi-DCI based multi-TRP.

An RRC configuration/RRC parameter for notifying a UE of application of a first or second indicated (joint/DL) TCI state to a CSI-RS resource may be provided/configured.

The provision/configuration of the RRC configuration/RRC parameter may be performed when an A-CSI-RS resource set for CSI/beam management (BM) is configured to follow a unified TCI state.

An offset (triggering offset) between a last symbol of a PDCCH for delivering triggering DCI and a start symbol of an A-CSI-RS resource of the A-CSI-RS resource set may be less than a specific threshold.

### {Option 1-2-1}

Any other DL signal may be present in the same symbol as that for the CSI-RS.

The such another DL signal may be, for example, a DL signal associated with the same CORESET pool index as a CORESET pool index of a PDCCH for triggering the CSI-RS.

In this case, the UE may apply a QCL assumption/TCI state for such another DL signal to reception of an A-CSI-RS.

When such another DL signal includes a plurality of (for example, two) TCI states (when such another DL signal is associated with a plurality of (for example, two) TCI states, such as when such another DL signal is an SFN PDCCH), the UE may apply a first TCI state of the plurality of TCI states to reception of the A-CSI-RS.

According to option 1-2-1, irrespective of whether a QCL assumption for a DL signal in the same symbol as that for the A-CSI-RS is equivalent to an indicated TCI state and irrespective of support of a capability related to a plurality of default beams, it is possible to define UE operation and to achieve avoidance of complexity and cost reduction of the UE.

### {Option 1-2-2}

Any other DL signal may not be present in the same symbol as that for the CSI-RS.

The such another DL signal may be, for example, a DL signal associated with the same CORESET pool index as a CORESET pool index of a PDCCH for triggering the CSI-RS.

Any other DL signal not including a TCI state may be present in the same symbol as that for the CSI-RS.

The such another DL signal may be, for example, a DL signal associated with the same/different CORESET pool index as/from a CORESET pool index of a PDCCH for triggering the CSI-RS.

Option 1-2-2 may be applied to a case where a condition for application of option 1-2-1 above is not satisfied (for example, a case of "Else").

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

The first and second indicated (joint/DL) TCI states may each be determined based on a CORESET pool index (or an indicated TCI state specified by the CORSET pool index).

For example, the first indicated TCI state may be an indicated TCI state corresponding to/associated with a CORESET pool index of a first value (for example, 0). For example, the first indicated TCI state may correspond to an indicated TCI state specified by using the CORESET pool index of the first value (for example, 0).

For example, the second indicated TCI state may be an indicated TCI state corresponding to/associated with a CORESET pool index of a second value (for example, 1). For example, the second indicated TCI state may correspond to an indicated TCI state specified by using the CORESET pool index of the second value (for example, 1).

When the UE does not support the capability related to a plurality of (two) default beams in the second frequency range (for example, FR2), the UE may apply, irrespective of the provided/configured RRC configuration/RRC parameter above, a specific indicated (joint/DL) TCI state to (reception of) the A-CSI-RS.

The specific indicated TCI state may be, for example, an indicated TCI state associated with the same CORESET pool index as a CORESET pool index of a PDCCH for triggering the A-CSI-RS.

According to Embodiment 1-2, even when the unified TCI state framework is used for multi-DCI based multi-TRP, it is possible to appropriately determine a TCI state/QCL assumption to be applied to the A-CSI-RS.

According to the first embodiment described above, even when the unified TCI state framework is used for single/multi-DCI based multi-TRP, it is possible to appropriately determine a TCI state/QCL assumption to be applied to the A-CSI-RS.

### <Second Embodiment>

Operation related to a default beam of a DL signal (for example, A-CSI-RS) for single-DCI based multi-TRP (sDCI based M-TRP) and operation related to a default beam of a DL signal (for example, A-CSI-RS) for multi-DCI based multi-TRP (mDCI based M-TRP) may be defined.

Operation related to a default beam of a DL signal (for example, A-CSI-RS) for single-DCI based multi-TRP and operation related to a default beam of a DL signal (for example, A-CSI-RS) for multi-DCI based multi-TRP may be commonly defined.

A unified TCI state framework may be enhanced for single-DCI based multi-TRP and for multi-DCI based multi-TRP.

An RRC configuration/RRC parameter for notifying a UE of application of a first or second indicated (joint/DL) TCI state to a CSI-RS resource may be provided/configured.

The provision/configuration of the RRC configuration/RRC parameter may be performed when an A-CSI-RS resource set for CSI/beam management (BM) is configured to follow a unified TCI state.

An offset (triggering offset) between a last symbol of a PDCCH for delivering triggering DCI and a start symbol of an A-CSI-RS resource of the A-CSI-RS resource set may be less than a specific threshold.

### {Option 2-1}

Any other DL signal may be present in the same symbol as that for the CSI-RS.

In this case, the UE may apply a QCL assumption/TCI state for such another DL signal to reception of an A-CSI-RS.

When such another DL signal includes a plurality of (for example, two) TCI states (when such another DL signal is associated with a plurality of (for example, two) TCI states), the UE may apply a first TCI state of the plurality of TCI states to reception of the A-CSI-RS.

According to option 2-1, irrespective of whether a QCL assumption for a DL signal in the same symbol as that for the A-CSI-RS is equivalent to an indicated TCI state and irrespective of support of a capability related to a plurality of default beams, it is possible to define UE operation and to achieve avoidance of complexity and cost reduction of the UE.

### {Option 2-2}

Any other DL signal may not be present in the same symbol as that for the CSI-RS. Any other DL signal not including a TCI state may be present in the same symbol as that for the CSI-RS.

Option 2-2 may be applied to a case where a condition for application of option 2-1 above is not satisfied (for example, a case of "Else").

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

When the UE does not support the capability related to a plurality of (two) default beams in the second frequency range (for example, FR2), the UE may apply, irrespective of the provided/configured RRC configuration/RRC parameter above, the first (or second) indicated (joint/DL) TCI state to (reception of) the A-CSI-RS.

In a case of multi-DCI based multi-TRP (a case where the UE is configured with multi-DCI based multi-TRP), the first and second indicated (joint/DL) TCI states may each be determined based on a CORESET pool index (or an indicated TCI state specified by the CORSET pool index).

For example, the first indicated TCI state may be an indicated TCI state corresponding to/associated with a CORESET pool index of a first value (for example, 0). For example, the first indicated TCI state may correspond to an indicated TCI state specified by using the CORESET pool index of the first value (for example, 0).

For example, the second indicated TCI state may be an indicated TCI state corresponding to/associated with a CORESET pool index of a second value (for example, 1). For example, the second indicated TCI state may correspond to an indicated TCI state specified by using the CORESET pool index of the second value (for example, 1).

### {Variation 1 of Option 2-1}

Any other DL signal may be present in the same symbol as that for the CSI-RS.

In single-DCI based multi-TRP, the UE may apply a QCL assumption/TCI state for such another DL signal to reception of an A-CSI-RS.

When such another DL signal includes a plurality of (for example, two) TCI states (when such another DL signal is associated with a plurality of (for example, two) TCI states), the UE may apply a first TCI state of the plurality of TCI states to reception of the A-CSI-RS.

In multi-DCI based multi-TRP, the UE may apply, to reception of the A-CSI-RS, a QCL assumption/TCI state for such another DL signal associated with the same CORESET pool index as a CORESET pool index of a PDCCH for triggering the A-CSI-RS.

According to the present variation, it is possible to perform independent default QCL/beam operation for each TRP without having a large impact on an existing specification, and thus UE implementation can be simplified.

### {Variation 2 of Option 2-1}

Any other DL signal may be present in the same symbol as that for the CSI-RS.

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

Otherwise (for example, when the UE does not support the capability related to a plurality of (two) default beams in the second frequency range (for example, FR2)), the UE may apply a QCL assumption/TCI state for such another DL signal to reception of the A-CSI-RS.

When such another DL signal includes a plurality of (for example, two) TCI states (when such another DL signal is associated with a plurality of (for example, two) TCI states), the UE may apply a first TCI state of the plurality of TCI states to reception of the A-CSI-RS.

In a case of multi-DCI based multi-TRP (a case where the UE is configured with multi-DCI based multi-TRP), the first and second indicated (joint/DL) TCI states may each be determined based on a CORESET pool index (or an indicated TCI state specified by the CORSET pool index).

For example, the first indicated TCI state may be an indicated TCI state corresponding to/associated with a CORESET pool index of a first value (for example, 0). For example, the first indicated TCI state may correspond to an indicated TCI state specified by using the CORESET pool index of the first value (for example, 0).

For example, the second indicated TCI state may be an indicated TCI state corresponding to/associated with a CORESET pool index of a second value (for example, 1). For example, the second indicated TCI state may correspond to an indicated TCI state specified by using the CORESET pool index of the second value (for example, 1).

### {Variation 3 of Option 2-1}

Any other DL signal may be present in the same symbol as that for the CSI-RS.

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

Otherwise (in a case of "Else," such as when the UE does not support the capability related to a plurality of (two) default beams in the second frequency range (for example, FR2)), the UE may apply a QCL assumption/TCI state for such another DL signal to reception of the A-CSI-RS.

In this case (the case of "Else" above), in a case of single-DCI based multi-TRP, the UE may apply a QCL assumption/TCI state for such another DL signal to reception of an A-CSI-RS. When such another DL signal includes a plurality of (for example, two) TCI states (when such another DL signal is associated with a plurality of (for example, two) TCI states), the UE may apply a first TCI state of the plurality of TCI states to reception of the A-CSI-RS.

In this case (the case of "Else" above), in a case of multi-DCI based multi-TRP, the UE may apply, to reception of the A-CSI-RS, a QCL assumption/TCI state for such another DL signal associated with the same CORESET pool index as a CORESET pool index of a PDCCH for triggering the A-CSI-RS.

In a case of multi-DCI based multi-TRP (a case where the UE is configured with multi-DCI based multi-TRP), the first and second indicated (joint/DL) TCI states may each be determined based on a CORESET pool index (or an indicated TCI state specified by the CORSET pool index).

For example, the first indicated TCI state may be an indicated TCI state corresponding to/associated with a CORESET pool index of a first value (for example, 0). For example, the first indicated TCI state may correspond to an indicated TCI state specified by using the CORESET pool index of the first value (for example, 0).

For example, the second indicated TCI state may be an indicated TCI state corresponding to/associated with a CORESET pool index of a second value (for example, 1). For example, the second indicated TCI state may correspond to an indicated TCI state specified by using the CORESET pool index of the second value (for example, 1).

### {Variations of Option 2-2}

In option 2-2, the first (or second) indicated (joint/DL) TCI state being applied to (reception of) the A-CSI-RS by the UE, irrespective of the provided/configured RRC configuration/RRC parameter above may correspond to operation for single DCI.

In a case of multi-DCI, the UE may apply, to reception of the A-CSI-RS, an indicated TCI state with a CORESET pool index corresponding to the triggering DCI.

When the UE is a UE in a first frequency range (for example, FR1) (if the UE is in FR1) or when the UE supports a capability related to a plurality of (two) default beams in a second frequency range (for example, FR2), the UE may apply, based on/depending on the provided/configured RRC configuration/RRC parameter above, any one of a first and second indicated (joint/DL) TCI state to (reception of) the A-CSI-RS.

When the UE does not support the capability related to a plurality of (two) default beams in the second frequency range (for example, FR2), and single-DCI based multi-TRP is used, the UE may apply, irrespective of the provided/configured RRC configuration/RRC parameter above, the first (or second) indicated (joint/DL) TCI state to (reception of) the A-CSI-RS.

When the UE does not support the capability related to a plurality of (two) default beams in the second frequency range (for example, FR2), and multi-DCI based multi-TRP is used, the UE may apply, to (reception of) the A-CSI-RS, an indicated TCI state for such another DL signal associated with the same CORESET pool index as a CORESET pool index of a PDCCH for triggering the A-CSI-RS, irrespective of the provided/configured RRC configuration/RRC parameter above.

According to the present variation, it is possible to perform independent default QCL/beam operation for each TRP without having a large impact on an existing specification, and thus UE implementation can be simplified.

According to the second embodiment described above, even when the unified TCI state framework is used for single/multi-DCI based multi-TRP, it is possible to appropriately determine a TCI state/QCL assumption to be applied to the A-CSI-RS.

### <Third Embodiment>

A third embodiment may be applied to single-DCI based multi-TRP or to multi-DCI based multi-TRP.

Operation related to a default beam for multi-DCI based multi-TRP may be defined by adding a condition related to multi-DCI based multi-TRP (for example, a condition related to a CORESET pool index) to operation related to a default beam for single-DCI based multi-TRP. Such definition enables operation for single DCI and operation for multi-DCI to be commonly defined, and thus a specification can be simplified, and UE/base station implementation can be simplified.

For the condition, in a case of multi-DCI based multi-TRP (a case where the UE is configured with multi-DCI based multi-TRP), first and second indicated (joint/DL) TCI states to be described below may each be determined based on a CORESET pool index, for example. In other words, when the determination of the indicated TCI state is performed, the third embodiment may be applied for multi-DCI based multi-TRP.

In this case, for example, the first indicated TCI state may be an indicated TCI state corresponding to/associated with a CORESET pool index of a first value (for example, 0). For example, the first indicated TCI state may correspond to an indicated TCI state specified by using the CORESET pool index of the first value (for example, 0).

In this case, for example, the second indicated TCI state may be an indicated TCI state corresponding to/associated with a CORESET pool index of a second value (for example, 1). For example, the second indicated TCI state may correspond to an indicated TCI state specified by using the CORESET pool index of the second value (for example, 1).

The operation related to the default beam for single-DCI based multi-TRP above will be described below. A unified TCI state framework may be enhanced for single-DCI based multi-TRP.

The UE may perform the operation related to single-DCI based multi-TRP by using a unified TCI state.

The UE may be configured with a specific RRC parameter.

The specific RRC parameter may be, for example, report configuration information associated with CSI (for example, CSI-AssociatedReportConfigInfo).

The report configuration information associated with the CSI (for example, CSI-AssociatedReportConfigInfo) may be included in a configuration parameter for a CSI aperiodic trigger state (for example, CSI-AperiodicTriggerState) per CSI-RS resource set or per aperiodic CSI-RS resource set, for example.

The report configuration information associated with the CSI (for example, CSI-AssociatedReportConfigInfo) may, when an aperiodic CSI-RS resource set for CSI/beam management (BM) is configured to follow a unified TCI state, be a parameter for notifying/configuring, to the UE, which (for example, a first or second) joint/DL TCI state is to be applied to the CSI-RS resource set, for example.

The specific RRC parameter may be, for example, a configuration parameter for a unified TCI state (for example, a Rel-17/18 unified TCI state).

An offset (triggering offset) between a last symbol of a PDCCH for delivering triggering DCI and a start symbol of an aperiodic CSI-RS resource of the aperiodic CSI-RS resource set may be less than a specific threshold.

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, configuration of the specific RRC parameter, and a QCL assumption for another DL signal.

### <<Embodiment 3-1>>

The UE may judge a QCL assumption/TCI state to be applied to the CSI-RS, based on configuration of the specific RRC parameter.

For example, the UE may employ Embodiment 3-1 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, and configuration of the specific RRC parameter.

For example, when another DL signal is present in the same symbol as that for the CSI-RS, the UE may apply a QCL assumption for such another DL signal to reception of the aperiodic (A-) CSI-RS.

When a plurality of (for example, two) TCI states/QCL assumptions are associated with such another DL signal, the UE may select/determine a specific (for example, a first (or second)) TCI state of the TCI states/QCL assumptions.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

### <<Embodiment 3-2>>

When a QCL assumption for another DL signal in the same symbol as that for the CSI-RS is one of the first and second indicated TCI states, Embodiment 3-1 above can be employed without any problem. Otherwise, however, the UE is required to perform buffering using three different beams (for example, the first and second indicated TCI states and the QCL assumption for such another DL signal), and thus it is considered that complexity of the UE increases (problem 1).

Embodiment 3-2 describes an example of a method for solving the problem.

The UE may judge a QCL assumption/TCI state to be applied to the CSI-RS, based on configuration of the specific RRC parameter.

For example, the UE may employ Embodiment 3-2 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, and configuration of the specific RRC parameter.

For example, another DL signal may be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

For example, another DL signal may be present in the same symbol as that for the CSI-RS. In this case, when the UE does not support a capability related to a plurality of (for example, two) default beams for single-DCI based multi-TRP in a second frequency range (for example, FR2), the UE may apply a QCL assumption for such another DL signal to reception of the A-CSI-RS.

When a plurality of (for example, two) TCI states are associated with such another DL signal, the UE may select/determine a specific (for example, a first (or second)) TCI state of the TCI states.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

### <<Embodiment 3-3>>

Embodiment 3-3 describes another example of the method for solving problem 1 above.

The UE may judge a QCL assumption/TCI state to be applied to the CSI-RS, based on configuration of the specific RRC parameter.

For example, the UE may employ Embodiment 3-3 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, configuration of the specific RRC parameter, and a QCL assumption for another DL signal.

For example, another DL signal may be present in the same symbol as that for the CSI-RS. In this case, when the UE uses a first frequency range (for example, FR1) or the UE supports a capability related to a plurality of (for example, two) default beams for single-DCI based multi-TRP in a second frequency range (for example, FR2), and a QCL assumption for another DL signal is any one of a plurality of indicated TCI states (for example, a first or second indicated TCI state) (condition 1-3), the UE may judge an indicated (joint/DL) TCI state (for example, any one of the first TCI state and the second TCI state) to be applied to the A-CSI-RS, according to configuration of a specific RRC parameter.

For example, another DL signal may be present in the same symbol as that for the CSI-RS. In this case, when condition 1-3 above is not satisfied, the UE may apply the QCL assumption for such another DL signal to reception of the A-CSI-RS.

When a plurality of (for example, two) TCI states are associated with such another DL signal, the UE may select/determine a specific (for example, a first (or second)) TCI state of the TCI states.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

### <<Embodiment 3-4>>

Embodiment 3-4 describes another example of the method for solving problem 1 above.

The UE may judge a QCL assumption/TCI state to be applied to the CSI-RS, based on configuration of the specific RRC parameter.

For example, the UE may employ Embodiment 3-4 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, configuration of the specific RRC parameter, and a QCL assumption for another DL signal.

For example, another DL signal may be present in the same symbol as that for the CSI-RS. In this case, when the UE uses a first frequency range (for example, FR1) or the UE supports a capability related to a plurality of (for example, two) default beams for single-DCI based multi-TRP in a second frequency range (for example, FR2), and a QCL assumption for another DL signal is any one of a plurality of indicated TCI states (for example, a first or second indicated TCI state) (condition 1-4), the UE may judge an indicated (joint/DL) TCI state (for example, any one of the first TCI state and the second TCI state) to be applied to the A-CSI-RS, according to configuration of a specific RRC parameter.

For example, another DL signal may be present in the same symbol as that for the CSI-RS. In this case, when condition 1-4 above is not satisfied, the UE may apply, irrespective of the configuration of the specific RRC parameter, a specific (for example, a first (or second)) indicated (joint/DL) TCI state to the A-CSI-RS.

When a plurality of (for example, two) TCI states are associated with such another DL signal, the UE may select/determine a specific (for example, a first (or second)) TCI state of the TCI states.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

### <<Embodiment 3-5>>

Embodiment 3-5 describes another example of the method for solving problem 1 above.

The UE may judge a QCL assumption/TCI state to be applied to the CSI-RS, based on configuration of the specific RRC parameter.

For example, the UE may employ Embodiment 3-5 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, configuration of the specific RRC parameter, and a QCL assumption for another DL signal.

The specific UE capability may include a capability related to the number of beams used for buffering.

The number of beams may be up to three, for example.

For example, another DL signal may be present in the same symbol as that for the CSI-RS. In this case, when the UE uses a first frequency range (for example, FR1), the UE supports a capability related to a plurality of (for example, three) default beams for single-DCI based multi-TRP in a second frequency range (for example, FR2), or the UE supports a capability related to a plurality of (for example, two) default beams for single-DCI based multi-TRP in the second frequency range, and a QCL assumption for another DL signal is any one of a plurality of indicated TCI states (for example, a first or second indicated TCI state), the UE may judge an indicated (joint/DL) TCI state (for example, any one of the first TCI state and the second TCI state) to be applied to the A-CSI-RS, according to configuration of a specific RRC parameter.

For example, another DL signal may be present in the same symbol as that for the CSI-RS. In this case, when the UE supports the capability related to a plurality of (for example, two) default beams for single-DCI based multi-TRP in the second frequency range, and a QCL assumption for another DL signal is different from any one of the plurality of indicated TCI states (for example, the first or second indicated TCI state), the UE may follow at least one of alternatives 3-5-1 and 3-5-2 below.

For example, the UE may apply a QCL assumption for another DL signal to reception of the A-CSI-RS. When a plurality of (for example, two) TCI states are associated with such another DL signal, the UE may select/determine a specific (for example, a first (or second)) TCI state of the TCI states (alternative 3-5-1).

For example, the UE may apply, irrespective of configuration of a specific RRC parameter, a specific (for example, a first (or second)) indicated (joint/DL) TCI state to the A-CSI-RS (alternative 3-5-2).

For example, another DL signal may be present in the same symbol as that for the CSI-RS. In this case, when the UE does not support the capability related to a plurality of (for example, two) default beams for single-DCI based multi-TRP in the second frequency range and the capability related to a plurality of (for example, three) default beams for single-DCI based multi-TRP in the second frequency range, the UE may apply a QCL assumption for another DL signal to reception of the A-CSI-RS.

When a plurality of (for example, two) TCI states are associated with such another DL signal, the UE may select/determine a specific (for example, a first (or second)) TCI state of the TCI states.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

### <<Embodiment 3-6>>

Embodiment 3-6 describes an example of a method for solving problem 1 above with easier implementation.

The UE may judge a QCL assumption/TCI state to be applied to the CSI-RS, based on configuration of the specific RRC parameter.

For example, the UE may employ Embodiment 3-6 when being configured with the specific RRC parameter.

For example, the UE may, when not being configured with the specific RRC parameter, perform operation defined in an existing specification (for example, Rel. 15/16/17).

The UE may judge a QCL assumption/TCI state to be applied to the CSI-RS, based on at least one of the presence or absence of another DL signal in the same symbol as that for the CSI-RS, a frequency range, the presence or absence of support of a specific UE capability, configuration of the specific RRC parameter, and a QCL assumption for another DL signal.

For example, another DL signal may be present in the same symbol as that for the CSI-RS. In this case, when the UE uses a first frequency range (for example, FR1), the UE may judge an indicated (joint/DL) TCI state (for example, any one of a first TCI state and a second TCI state) to be applied to the A-CSI-RS, according to configuration of a specific RRC parameter.

For example, another DL signal may be present in the same symbol as that for the CSI-RS. In this case, when the UE uses a second frequency range (for example, FR2), the UE may apply a QCL assumption for such another DL signal to reception of the A-CSI-RS.

When a plurality of (for example, two) TCI states are associated with such another DL signal, the UE may select/determine a specific (for example, a first (or second)) TCI state of the TCI states.

For example, another DL signal may not be present in the same symbol as that for the CSI-RS. In this case, when the UE uses a first frequency range (for example, FR1) or when the UE supports a capability related to a plurality of (for example, two) default beams for single-DCI based multi-TRP in a second frequency range (for example, FR2), the UE may judge an indicated (joint/DL) TCI state (for example, any one of the first TCI state and the second TCI state) to be applied to the A-CSI-RS, according to configuration of a specific RRC parameter.

When the UE supports the capability related to the default beams, the UE may use a plurality of (for example, two/both) indicated (joint/DL) TCI states to buffer a received signal (temporally) prior to a specific threshold.

For example, another DL signal may not be present in the same symbol as that for the CSI-RS. In this case, when the UE does not support the capability related to a plurality of (for example, two) default beams for single-DCI based multi-TRP in the second frequency range (for example, FR2), the UE may apply, irrespective of the configuration of the specific RRC parameter, a specific (for example, a first (or second)) indicated (joint/DL) TCI state to the A-CSI-RS.

According to the third embodiment described above, even when the unified TCI state framework is used for single/multi-DCI based multi-TRP, it is possible to appropriately determine a TCI state/QCL assumption to be applied to the CSI-RS.

### <Variations of Each Embodiment>

In each embodiment, for the capability related to the plurality of (two) default beams, a capability for single-DCI based multi-TRP and a capability for multi-DCI based multi-TRP may be separately defined.

In each embodiment, for the capability related to the plurality of (two) default beams, a capability for single-DCI based multi-TRP and a capability for multi-DCI based multi-TRP may be defined as a common capability.

At least one of UE capability information indicating whether to support single-DCI based multi-TRP and UE capability information indicating whether to support multi-DCI based multi-TRP may be defined.

The UE may report at least one of support of a plurality of default beams/QCLs in single-DCI based multi-TRP and support of a plurality of default beams/QCLs in multi-DCI based multi-TRP, based on a combination of any one of the UE capability information indicating whether to support single-DCI based multi-TRP and the UE capability information indicating whether to support multi-DCI based multi-TRP, and capability information related to the common capability.

At least one of the embodiments of the present disclosure may be applied to a case where a specific higher layer parameter is configured.

For the specific higher layer parameter, a parameter for single-DCI based multi-TRP and a parameter for multi-DCI based multi-TRP may be separately defined, for example.

For the specific higher layer parameter, a parameter for single-DCI based multi-TRP and a parameter for multi-DCI based multi-TRP may be commonly defined, for example.

The second frequency range in the present disclosure may be, for example, at least one of FR2, FR2-1, and FR2-2.

Switch between FR2-1 and FR2-2 may be performed by using a specific method.

For example, the UE may perform the switch between FR2-1 and FR2-2, based on at least one of reporting of UE capability information or RRC signaling/MAC CE/DCI.

For example, the UE may perform the switch between FR2-1 and FR2-2, based on a specific threshold (irrespective of reporting of UE capability information).

The triggering offset/specific threshold related to the A-CSI-RS in the present disclosure may be the same as a scheduling offset/specific threshold related to the PDSCH, or may be a value independent of the scheduling offset/specific threshold related to the PDSCH (the triggering offset/specific threshold related to the A-CSI-RS may be different from the scheduling offset/specific threshold related to the PDSCH, for example).

The triggering offset/specific threshold related to the A-CSI-RS in the present disclosure may be based on a UE capability defined in an existing specification (such as Rel. 15/16/17 or earlier versions), or may be a value reported by using a UE capability for a newly defined unified TCI state.

When a plurality of DL signals overlapping the A-CSI-RS in the time domain are present, reception of the A-CSI-RS may be performed by using a TCI state for a specific DL signal selected based on a specific rule.

The specific rule may be a case that a DL signal to be transmitted first in the time domain (or a DL signal with the earliest start symbol) is selected.

The specific rule may be a case that a DL signal with the longest period of time in which the DL signal overlaps the A-CSI-RS in the time domain is selected.

Note that when another DL signal is absent in the same symbol as that for the A-CSI-RS, the UE may apply the same QCL assumption/TCI state as a QCL assumption/TCI state to be applied to the PDSCH.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case where a specific condition is satisfied. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information (for example, buffering of received signals using a plurality of indicated TCI states) for at least one of the above-described embodiments
- the number of supported indicated TCI states for received signals possible to be buffered

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of buffering of received signals using a plurality of indicated TCI states, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal comprising:
a control section that judges, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal; and
a receiving section that applies the TCI state to receive the A-CSI-RS, wherein
said another downlink signal is associated with a same control resource set (CORESET) pool index as a CORESET pool index of a physical downlink control channel (PDCCH) for triggering the A-CSI-RS.

### {Supplementary Note 2}

The terminal according to supplementary note 1, wherein when said another signal is present in the same symbol as the symbol for the A-CSI-RS, the control section judges to use the QCL assumption for said another signal as the TCI state.

### {Supplementary Note 3}

The terminal according to supplementary note 1 or 2, wherein the specific RRC parameter indicates that the TCI state to be applied to the A-CSI-RS is any one of a first indicated TCI state and a second indicated TCI state, the first indicated TCI state corresponds to an indicated TCI state specified by using a CORESET pool index of a first value, and the second indicated TCI state corresponds to an indicated TCI state specified by using a CORESET pool index of a second value.

### {Supplementary Note 4}

The terminal according to any one of supplementary notes 1 to 3, wherein when not supporting the specific capability in frequency range 2, the control section judges to use, as the TCI state, an indicated TCI state associated with the same CORESET pool index as the CORESET pool index of the PDCCH, irrespective of the configuration of the specific RRC parameter.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

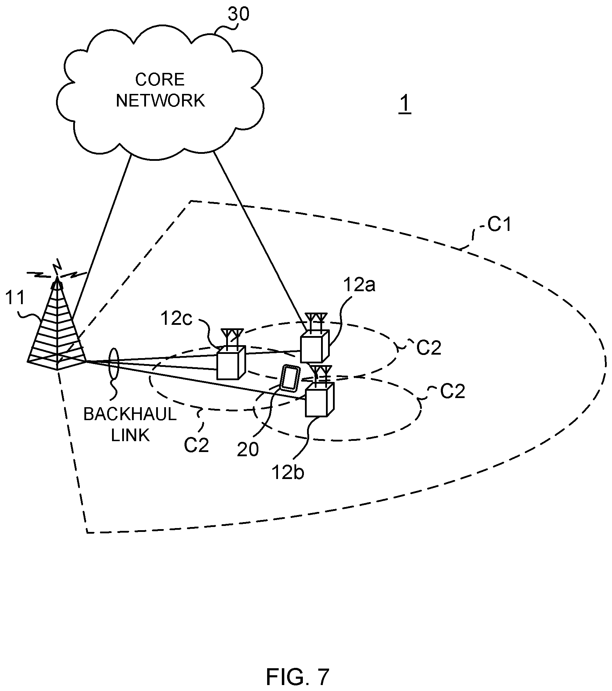

FIG. 7 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

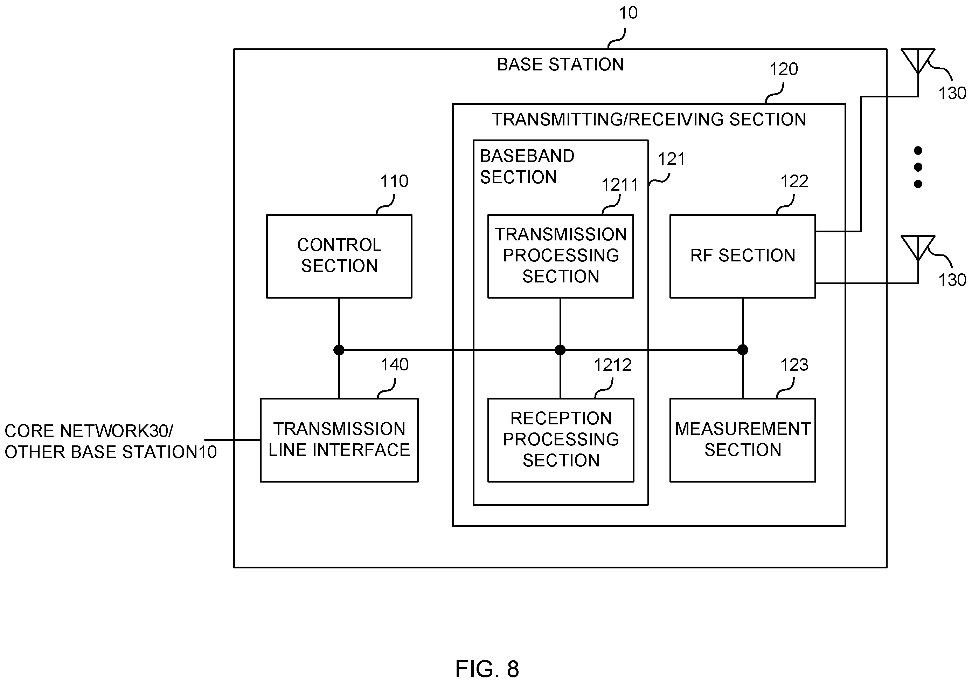

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may indicate, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, by using at least one of configuration of a specific Radio Resource Control (RRC) parameter, whether another downlink signal is present in a same symbol as that for the A-CSI-RS, a frequency range, presence or absence of support of a specific capability, and a quasi-co-location (QCL) assumption for said another downlink signal. The transmitting/receiving section 120 may apply the TCI state to transmit the A-CSI-RS. Said another downlink signal may be associated with a same control resource set (CORESET) pool index as a CORESET pool index of a physical downlink control channel (PDCCH) for triggering the A-CSI-RS (first/second/third embodiments).

### (User Terminal)

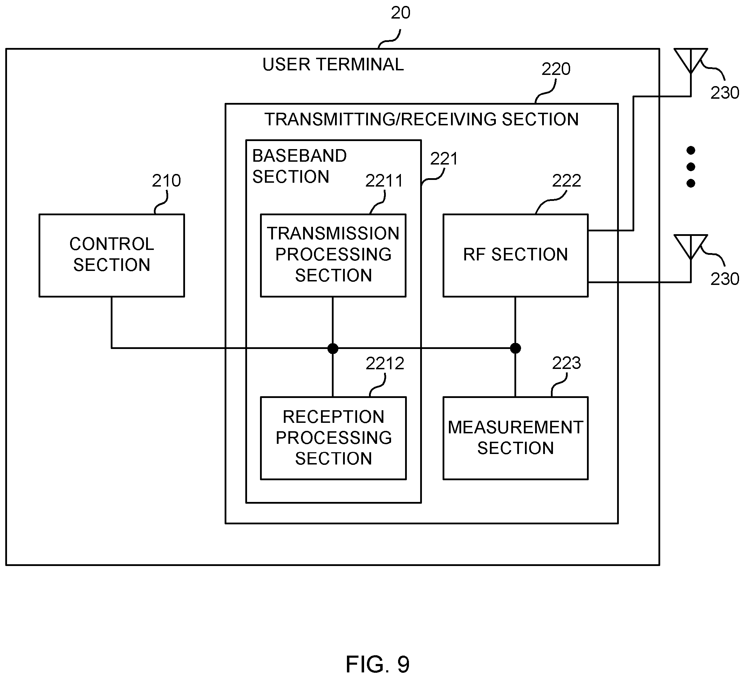

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may judge, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as that for the A-CSI-RS, a frequency range, presence or absence of support of a specific capability, and a quasi-co-location (QCL) assumption for said another downlink signal. The transmitting/receiving section 220 may apply the TCI state to receive the A-CSI-RS. Said another downlink signal may be associated with a same control resource set (CORESET) pool index as a CORESET pool index of a physical downlink control channel (PDCCH) for triggering the CSI-RS (first/second/third embodiments).

When said another signal is present in a same symbol as that for the A-CSI-RS, the control section 210 may judge to use the QCL assumption for said another signal as the TCI state (first/second/third embodiments).

The specific RRC parameter may indicate that the TCI state to be applied to the A-CSI-RS is any one of a first indicated TCI state and a second indicated TCI state. The first indicated TCI state may correspond to an indicated TCI state specified by using a CORESET pool index of a first value, and the second indicated TCI state may correspond to an indicated TCI state specified by using a CORESET pool index of a second value (first/second/third embodiments).

When not supporting the specific capability in frequency range 2, the control section 210 may judge to use, as the TCI state, an indicated TCI state associated with the same CORESET pool index as the CORESET pool index of the PDCCH, irrespective of the configuration of the specific RRC parameter (first/second/third embodiments).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

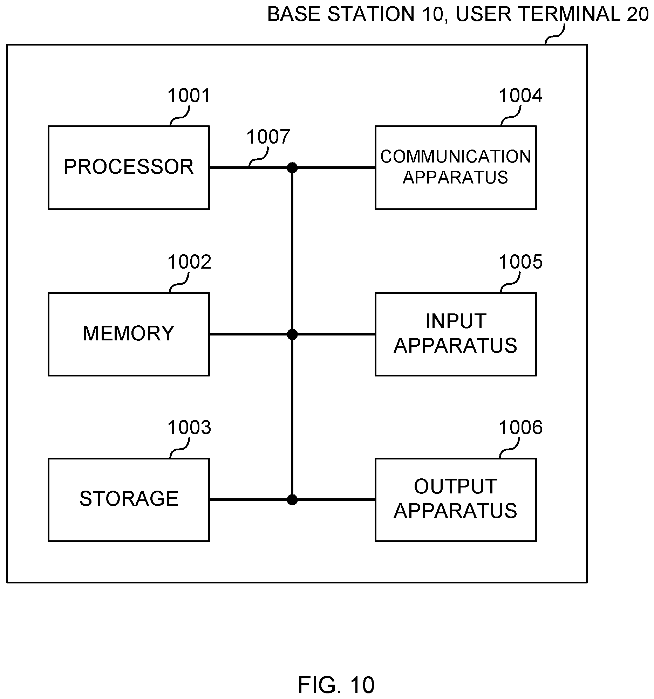

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

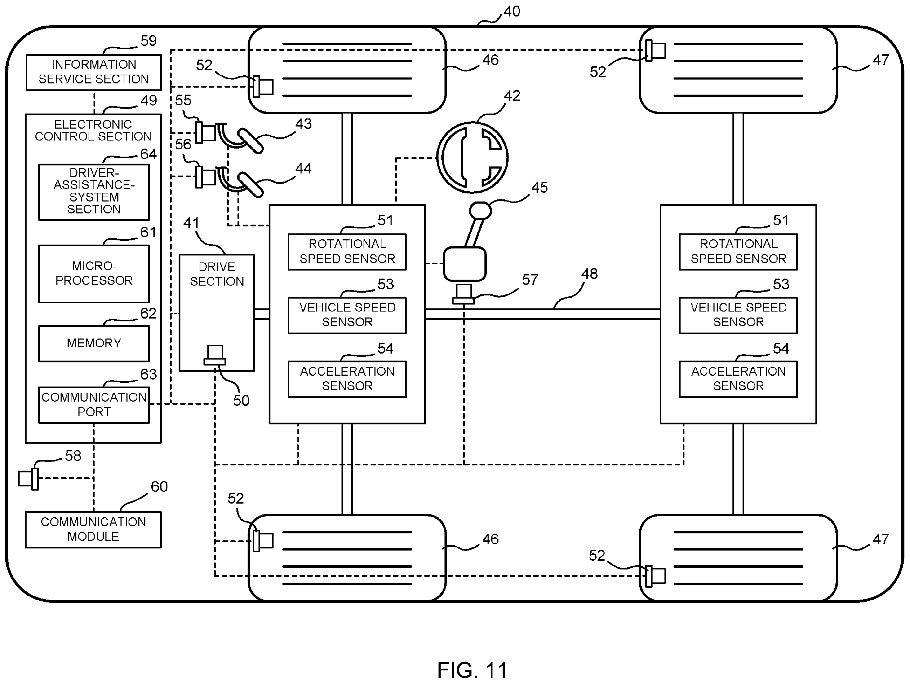

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that judges, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal; and
a receiving section that applies the TCI state to receive the A-CSI-RS, wherein
said another downlink signal is associated with a same control resource set (CORESET) pool index as a CORESET pool index of a physical downlink control channel (PDCCH) for triggering the A-CSI-RS.

2. The terminal according to claim 1, wherein
when said another signal is present in the same symbol as the symbol for the A-CSI-RS, the control section judges to use the QCL assumption for said another signal as the TCI state.

3. The terminal according to claim 1, wherein
the specific RRC parameter indicates that the TCI state to be applied to the A-CSI-RS is any one of a first indicated TCI state and a second indicated TCI state,
the first indicated TCI state corresponds to an indicated TCI state specified by using a CORESET pool index of a first value, and the second indicated TCI state corresponds to an indicated TCI state specified by using a CORESET pool index of a second value.

4. The terminal according to claim 1, wherein
when not supporting the specific capability in frequency range 2, the control section judges to use, as the TCI state, an indicated TCI state associated with the same CORESET pool index as the CORESET pool index of the PDCCH, irrespective of the configuration of the specific RRC parameter.

5. A radio communication method for a terminal, the radio communication method comprising:
judging, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, based on at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal; and
applying the TCI state to receive the A-CSI-RS, wherein
said another downlink signal is associated with a same control resource set (CORESET) pool index as a CORESET pool index of a physical downlink control channel (PDCCH) for triggering the A-CSI-RS.

6. A base station comprising:
a control section that indicates, when operation for a unified Transmission Configuration Indication (TCI) state using multi-transmission/reception point based on multi-downlink control information is configured, and a triggering offset for an aperiodic channel state information reference signal (A-CSI-RS) is less than a specific threshold, a TCI state to be applied to the A-CSI-RS, by using at least one of configuration of a specific Radio Resource Control (RRC) parameter, whether another downlink signal is present in a same symbol as a symbol for the A-CSI-RS, a frequency range, presence or absence of support of a specific capability, and a quasi-co-location (QCL) assumption for said another downlink signal; and
a transmitting section that applies the TCI state to transmit the A-CSI-RS, wherein
said another downlink signal is associated with a same control resource set (CORESET) pool index as a CORESET pool index of a physical downlink control channel (PDCCH) for triggering the A-CSI-RS.
